(19) Europäisches Patentamt
European Patent Office
Office européen des brevets

(11) **EP 4 539 363 A1**

(12) **EUROPEAN PATENT APPLICATION**

(43) Date of publication:
**16.04.2025 Bulletin 2025/16**

(21) Application number: **23306758.6**

(22) Date of filing: **10.10.2023**

(51) International Patent Classification (IPC):
**H04B 17/391** (2015.01)    **H04B 17/373** (2015.01)
**H04W 16/14** (2009.01)

(52) Cooperative Patent Classification (CPC):
**H04B 17/3913; H04B 17/373;** H04B 17/345;
H04W 16/14

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
• **Mitsubishi Electric R&D Centre Europe B.V.**
  **1119 NS  Schiphol Rijk Amsterdam (NL)**
  Designated Contracting States:
  **FR**
• **MITSUBISHI ELECTRIC CORPORATION**
  **Chiyoda-ku**
  **Tokyo 100-8310 (JP)**
  Designated Contracting States:
  **AL AT BE BG CH CY CZ DE DK EE ES FI GB GR HR HU IE IS IT LI LT LU LV MC ME MK MT NL NO PL PT RO RS SE SI SK SM TR**

(72) Inventors:
• **CORLAY, Vincent**
  **35708 RENNES CEDEX 7 (FR)**
• **SIBEL, Jean-Christophe**
  **35708 RENNES CEDEX 7 (FR)**
• **GRESSET, Nicolas**
  **35708 RENNES CEDEX 7 (FR)**

(74) Representative: **Plasseraud IP**
  **104 Rue de Richelieu**
  **CS92104**
  **75080 Paris Cedex 02 (FR)**

(54) **SMART SWITCH BETWEEN COMMUNICATION AND SENSING**

(57)    The invention relates to a method implemented within a system using a communication channel, the method comprising, for a given instance in a sequence,
- obtaining (306) a prediction of a potential interference on the communication channel, the prediction being provided by a predictive model (208); and
- providing (312) an indication of an operational state selected based on the prediction and based on a performance criterion, wherein the operational state corresponds to one element among conducting an operation which allows observing (302) a channel condition of the communication channel for the given instance, and not conducting said operation.

FIG. 3

EP 4 539 363 A1

## Description

### Technical Field

This disclosure pertains to the field of telecommunications.

The disclosure more particularly relates to a method, a non-transitory computer readable medium and a communication manager adapted to enable switching between two operational states, one of the operational states corresponding to sensing a channel condition of a radio communication channel.

### Background Art

In half-duplex communication systems, two or more communication devices may communicate with each other, but not simultaneously, the communication is one direction at a time. It is therefore possible to define a transmitter mode and a receiver mode. A communication device in a transmitter mode may use a communication channel to communicate. A communication device in a receiver mode may use the communication channel to listen to radio signals. The receiver mode may be used by the communication device to obtain, for instance, information regarding the state of the channel.

For instance, with the carrier-sense multiple access (CSMA) medium access control protocol, a communication device may listen to a channel in order to make sure that no other communication device is currently transmitting. This protocol is in general used as a collision-avoidance (CSMA/CA) system.

Indeed, if two communication devices transmit information in the same frequency band (without using a multiple access scheme), receivers are likely to experience a high interference power inducing a low signal to noise ratio (SNR). Such a low SNR often results in poor communication performance.

Similarly to the CSMA protocol, the 5G standard specifies CSI-IM (channel state information interference measurement) pilots, where no device is supposed to be transmitting a signal in the considered cell. This enables to listen to the interfering signals, such as the signals coming from the neighbouring cells.

Having the knowledge of the presence or absence of an interfering signal enables to choose suited communication parameters. As a result, finding a good trade-off between communication and sensing is of high importance for efficient communication.

There is a need for improvements in the determination of switching decisions between a transmitter mode and a receiver mode.

### Summary

This disclosure improves the situation.

It is proposed a method implemented within a system using a communication channel, the method comprising, for a given instance in a sequence,

- obtaining a prediction of a potential interference on the communication channel, the prediction being provided by a predictive model; and
- providing an indication of an operational state selected based on the prediction and based on a performance criterion, wherein the operational state corresponds to one element among conducting an operation which allows observing a channel condition of the communication channel for the given instance, and not conducting said operation.

In the context of the disclosure, the "communication channel" is a radio channel useable for data transmission.

This method allows adaptively choosing operations based on predicted interference, and ensuring efficient performance. Regular observations of the channel condition refine system adaptability and accuracy in predicting future interference. Flexibility is afforded as the method allows either observing or not observing based on current predictions. The operational state corresponding to not observing the channel condition may allow, in an exemplary implementation, conducting an alternate operation, like transmitting data over the communication channel, meaning that the operational state is a communication state or communication mode. In this context, the method proactively allows a high communication performance, since data loss is minimized by transmitting during low interference and avoiding transmission during high interference, enhancing communication quality. Also, not observing the channel condition may allow selecting an idle, passive, or low-energy consumption state or mode. In this case, the method allows a high interference characterization performance while conserving energy.

In an example, after the operation is conducted for the given instance, the predictive model is updated with the observed channel condition for the given instance.

This continuous updating of the predictive model further refines its accuracy over time. As a result, the system becomes increasingly proficient at anticipating and mitigating interference, leading to sustained performance improvements. For instance, in a dense urban environment with numerous interfering signals, updating the predictive model as proposed facilitates maintaining stable connections.

In an example, the operational state is selected by obtaining a figure of merit associated to the prediction, comparing the figure of merit with a threshold representing a desired performance, and deciding on the operational state based on a result of the comparison.

The figure of merit may be for instance determined by the predictive model and is a quantifiable measure to evaluate predictions, allowing for more informed and objective decisions. This approach ensures that decisions align with predefined performance metrics, ultimately enhancing the quality and reliability of communications.

In an example, the figure of merit relates at least to a reliability of the prediction.

Accounting for prediction reliability ensures that decisions are grounded in trustworthy predictions. This minimizes instances where decisions are based on unreliable predictions, leading to a more stable communication environment. This reliability can be used to contextualize the interference prediction and/or to improve the predictive model in view of outputting more reliable predictions in future instances.

In an example, the reliability is based on at least one of:

- one or more fixed parameters,
- observed channel conditions, and
- feedback concerning a performance.

Using one or more fixed parameters ensures that the predictions remain anchored to consistent metrics, offering stability especially in environments where certain conditions rarely change. For instance, if a reliability of a prediction output by the predictive model can be determined based either on the parameters of the predictive model or based on predictions output by the predictive model having these fixed parameters, then in a scenario where the parameters of the predictive model are fixed and non-modifiable, then the reliability of a prediction can be said to be based, at least indirectly, on these fixed parameters.

Relying on observed channel conditions allows reacting to real-time changes, which is particularly advantageous in environments with rapidly changing interference patterns.

Incorporating feedback concerning performance ensures that the predictive model remains aligned with the actual performance outcomes. Implementing a learning mechanism using such feedback enables enhancing future performance predictions.

When the predictive model uses artificial intelligence means and the reliability is updated based on observed channel conditions and/or based on feedback concerning a performance, then the reliability may be leveraged to enhance the training of the predictive model.

In an example, the operational state is selected by applying a decision strategy based on a fixed set of criteria.

Using a fixed set of criteria ensures consistency in decision-making, which is particularly advantageous in some types of standardized or regulated environments.

In an example, the operational state is selected by applying a decision strategy which evolves from an instance to another, informed by at least one learning mechanism.

This allows adapting decision-making to changing conditions and learning from past experiences. Such adaptability is particularly beneficial in rapidly changing environments, such as mobile networks where devices frequently move between different base stations.

In an example, the at least one learning mechanism includes a reinforcement learning mechanism.

Reinforcement learning, by rewarding beneficial outcomes and discouraging undesirable ones, enables optimization of decision-making over time. For instance, in scenarios like autonomous vehicle communications, the method can learn optimal data transmission times to minimize interference from neighboring vehicles.

In an example, the predictive model is informed with at least one observed channel condition of the communication channel for at least one previous instance to provide the prediction for the given instance.

This approach allows a more comprehensive understanding of the behavior of the communication channel, generally leading to more accurate predictions. This effect is increased when the predictive model is informed with at least one observed channel condition of the communication channel for a plurality of instances to provide the prediction for the given instance.

In an example, the prediction of the potential interference comprises a probabilistic measure of interference for the given instance and/or upcoming instances and/or includes an estimate of an interfering power level.

It shall be noted that, in the context of the disclosure, the "interference probability" and the "probabilistic measure" are distinct concepts, such that for instance, a probabilistic measure of the interference probability may be obtained. The prediction of the potential interference may for instance include a probability density function of interference probability for one or more next time slots, a probability mass function of interference probability for one or more next time slots, a prediction of the interfering power, etc...

A probabilistic measure of interference provides insights into the likelihood of potential disruptions, enabling risk-based decision-making. This is beneficial in environments where occasional interference might be tolerable, but frequent disruptions are not.

Estimating interfering power level offers a metric on the severity of the potential interference. In environments where there is a mix of minor and major potential disruptions, understanding the power level can guide a proportionate response that contributes to an efficient use of resources.

In an example, the operational state corresponding to not conducting the operation further corresponds to transmitting data.

In an example, the method further comprises, after providing an indication of an operational state corresponding to transmitting data, implementing a static link for transmitting the data over the communication channel.

Establishing a static link ensures a consistent and stable connection, ideal for scenarios requiring sustained data transfer without variations, such as streaming high-definition video content.

It is further proposed a computer program comprising instructions which, when the program is executed by a processing unit, cause the processing unit to carry out the above method.

It is further proposed a non-transitory computer-readable recording medium on which a program is recorded for implementing the above method when the program is executed by a processor.

It is further proposed a system being configured to, for a given instance in a sequence,

- obtain a prediction of a potential interference on a communication channel, the prediction being provided by a predictive model; and
- provide an indication of an operational state based on the prediction and based on a performance criterion, wherein the operational state corresponds to one element among conducting an operation which allows observing a channel condition of the communication channel for the given instance, and not conducting said operation.

Unless specifically stated otherwise, as apparent from the following discussions, it is appreciated that throughout the specification discussions utilizing terms such as "computing", "calculating", "generating", or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

Embodiments of the present invention may include apparatuses for performing the operations herein. This apparatus may be specially constructed for the desired purposes, or it may comprise a general-purpose computer or Digital Signal Processor ("DSP") selectively activated or reconfigured by a computer program stored in the computer. Such a computer program may be stored in a computer readable storage medium, such as, but is not limited to, any type of disk including floppy disks, optical disks, CD-ROMs, magnetic-optical disks, read-only memories (ROMs), random access memories (RAMs) electrically programmable read-only memories (EPROMs), electrically erasable and programmable read only memories (EEPROMs), magnetic or optical cards, or any other type of media suitable for storing electronic instructions, and capable of being coupled to a computer system bus.

The processes presented herein are not inherently related to any particular computer or other apparatus. Various general-purpose systems may be used with programs in accordance with the teachings herein, or it may prove convenient to construct a more specialized apparatus to perform the desired method. The desired structure for a variety of these systems will appear from the description below. In addition, embodiments of the present invention are not described with reference to any particular programming language. It will be appreciated that a variety of programming languages may be used to implement the teachings of the inventions as described herein.

**Brief Description of Drawings**

Other features, details and advantages will be shown in the following detailed description and on the figures, on which:

**Fig. 1**

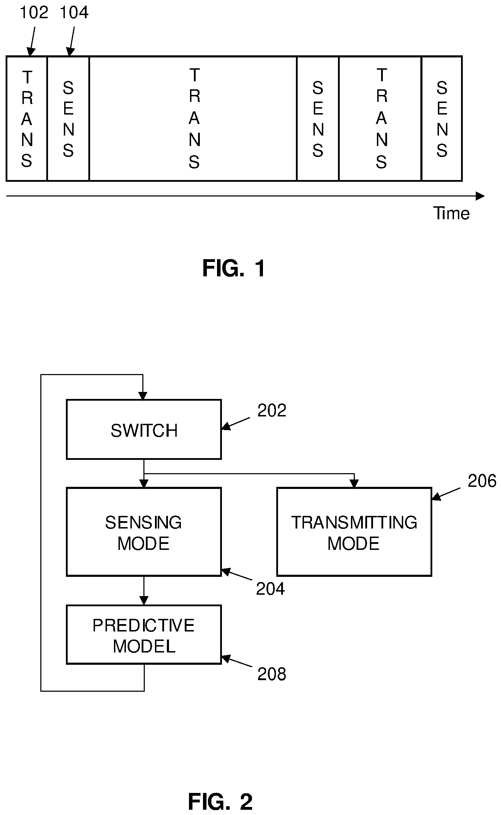

[Fig. 1] illustrates an example of alternation in time, for a communication device, between operational states in a communication system.

**Fig. 2**
[Fig. 2] illustrates an example of elements of a communication system for deciding on an operational state for a communication device at a transmission opportunity.

**Fig. 3**

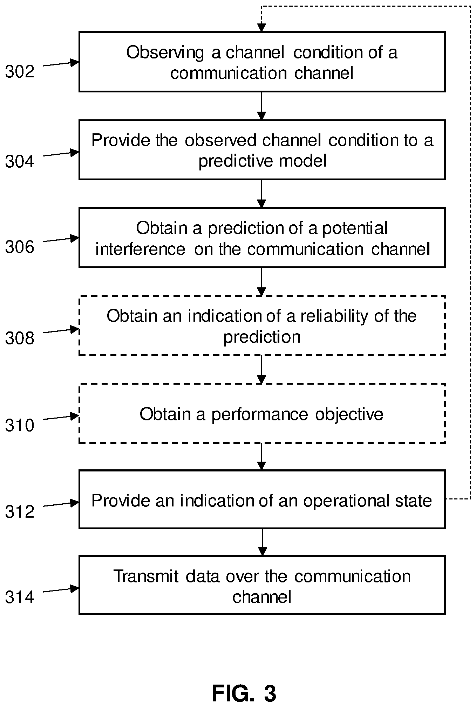

[Fig. 3] illustrates an example of procedure for deciding on an operational state for a communication device at a transmission opportunity.

**Fig. 4**

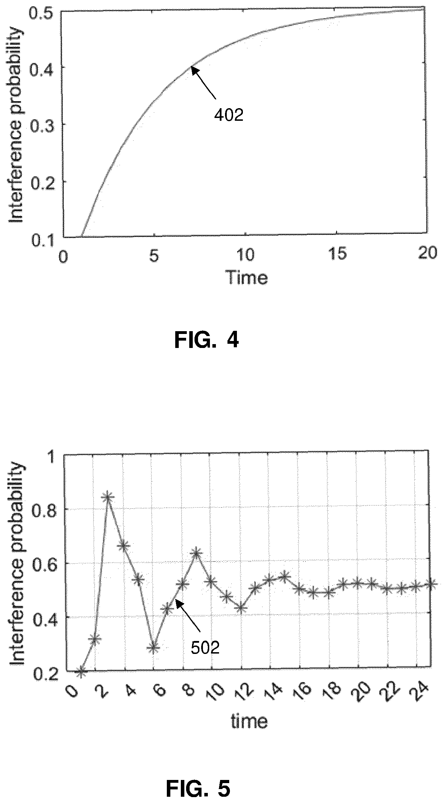

[Fig. 4] illustrates an example of evolution of an interference probability determined by using an example of predictive model where sensing is performed only at t=0.

**Fig. 5**
[Fig. 5] illustrates another example of evolution of an interference probability determined by using another example of predictive model where sensing is performed only at t=0.

**Fig. 6**

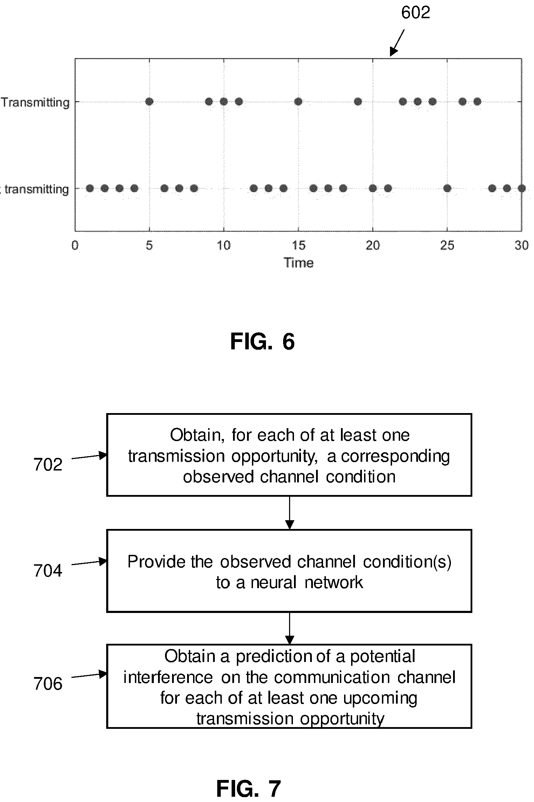

[Fig. 6] illustrates an example of sequence of operational states determined for a communication device in relation to a sequence of transmission opportunities.

**Fig. 7**
[Fig. 7] illustrates an example of use of a neural network to predict potential interference on a communication channel.

**Fig. 8**

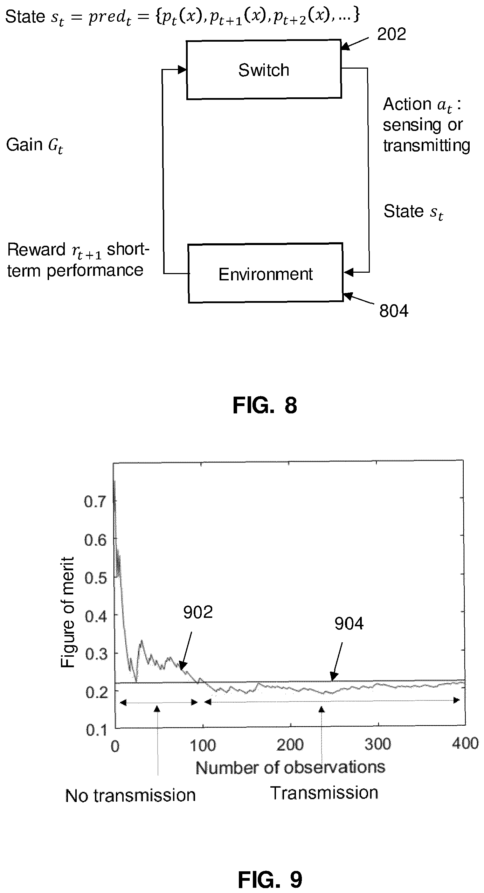

[Fig. 8] illustrates an example of mechanism to maximize a performance of a communication system using reinforcement learning.

**Fig. 9**
[Fig. 9] illustrates an example of mechanism to maximize a performance of a communication system.

**Fig. 10**

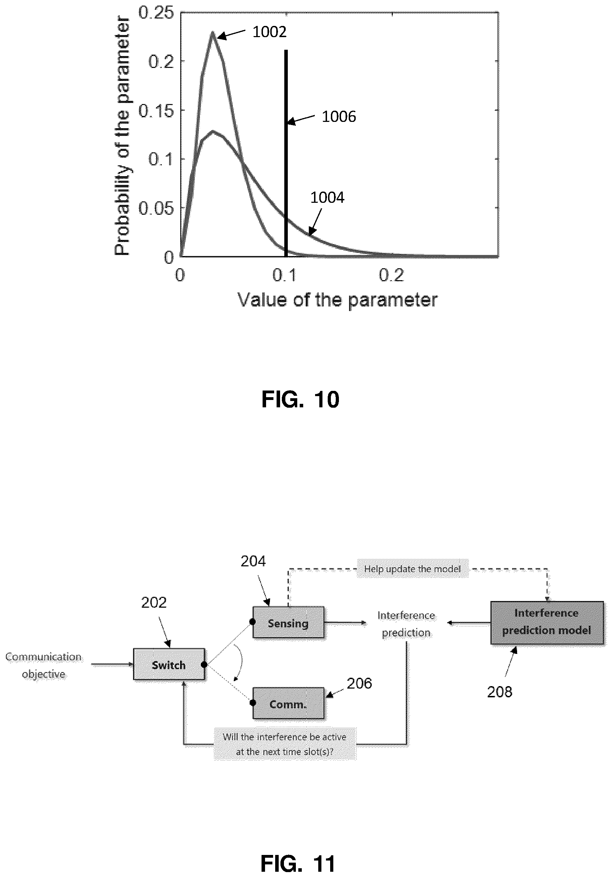

[Fig. 10] illustrates an example of distribution of a random variable $P$ representing a parameter $p$ for two sets of values $(n, k)$ where $n$ is a number of time slots for which a sensing operation is conducted and $k$ is a number of interferences observed by this sensing.

**Fig. 11**

**Fig. 12**

**Fig. 13**

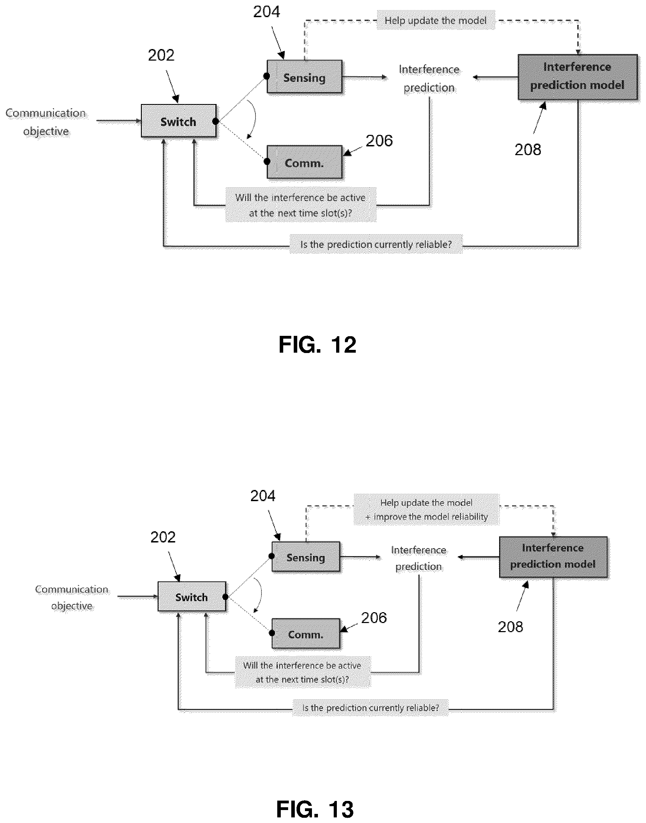

[Fig. 11], [Fig. 12] and [Fig. 13] illustrate different examples of schemes, using the elements represented in [Fig. 2], to control a switch.

## Description of Embodiments

The present disclosure is focused on a proposed technique which encompasses methods, systems and devices adapted to contribute to controlling a communication device between two possible operational states, or modes, including a sensing mode , where the communication device is configured to perform an operation leading to observing a channel condition of the communication channel and another mode where the communication device is not configured to perform said operation. This other mode, which is not a sensing mode, may rather be, for instance, a communication mode or a low-energy consumption mode.

In this document, sensing is defined as any operation to obtain information on the state of the communication channel. For instance, sensing can designate an operation of listening to the communication channel, or an operation of receiving feedback from a receiver on a quality of a previously transmitted message.

The proposed technique may be implemented in various types of communication systems, including point-to-point systems or point-to-multipoint systems. Such systems may use static links to transmit data in a scenario where a selected operational state corresponds to a communication mode and to transmitting data over the communication channel. Point-to-point systems may implement duplex communication techniques such as full-duplex or half-duplex techniques.

Fig. 1 is a simple illustration of a schedule for a communication device configured to alternately transmit and sense over time over a communication channel. The schedule comprises a plurality of transmission opportunities including first transmission opportunities 102 where the communication device is placed in the transmitting state and second transmission opportunities 104 where the communication device is placed in the sensing state.

The proposed technique involves, for a given instance in a sequence,

- determining a prediction of a potential interference on the communication channel using a predictive model informed by at least one observed channel condition of the communication channel; and
- deciding on an operational state based on the prediction and on a performance criterion, wherein the operational state corresponds to one element among conducting an operation which allows observing a channel condition of the communication channel for the given instance and not conducting said operation.

The operation which allows observing a channel condition of the communication channel is understood as being applied to a device or a system which may or may not have a specific functionality outside of observing said channel condition.

For instance, such device or system may be a communication device or system, so that when the operation which allows observing a channel condition of the communication channel is not conducted, the communication device or system may be configured to conduct, automatically or by an appropriate trigger, another operation which allows transmitting data over the communication system.

Alternatively, such device or system may be solely an interference characterization device or system, in which case, when the operation which allows observing a channel condition of the communication channel is not conducted, the device may be configured not to conduct any operation and to remain in, or switch to, an idle state, or passive state.

The performance criterion is a quantifiable measure that can be utilized to evaluate an efficiency, effectiveness and/or reliability of the abovementioned device or system or one of its functionalities. Examples of communication performance criteria may relate to throughput, latency, loss rate, signal-to-noise ratio. Examples of characterization performance criteria may relate to interference activity probability and/or to interference characterization accuracy, resolution and/or sensitivity. Examples of system performance criteria may relate to energy consumption, operational longevity or resource utilization. Performance criteria may be construed as short-term performance criteria (i.e. applicable to a single instance or to a limited number of consecutive instances) and/or as long-term performance criteria (i.e. averaged on a large number of instances).

Although the proposed technique is described as involving a decision on an operational state based on the prediction and on a performance criterion, the decision may be based on a plurality of predictions and/or on a plurality of performance criteria and/or on other inputs.

Each instance may refer to one or more transmission opportunities that correspond to resources associated to the communication channel. These resources may be represented for instance in a time domain and/or in a frequency domain. For the sake of simplicity, in the examples detailed in the present document, the instances are depicted as consecutive time intervals forming a time sequence.

The predictive model is a probabilistic module configured to output, as a prediction result, a variable indicating a probability that an interference is active. For instance, the probability may be represented by a Boolean variable which is TRUE if the interference is predicted to be active with very high probability and FALSE otherwise. The probabilistic module may use a dedicated algorithm and/or artificial intelligence means.

Fig. 2 provides an overview of a communication manager, in the sense of an aggregation of operably connected functional elements of a communication system that is suitable to provide an example of implementation of the proposed technique.

A switch 202 allows switching a communication device between a sensing mode 204 and a transmitting mode 206. When activated for a given instance, the sensing mode allows providing an observed channel condition as input to a predictive model 208.

The predictive model 208, which may in some exemplary implementations have received the observed channel condition for the given instance and/or for one or more previous instances, outputs an interference prediction for one or more upcoming instances. This output of the predictive model 208 is provided as input to the switch 202, which allows the switch to enact a decision-making process to decide on the operational state for the one or more upcoming instances.

Switching the communication device to the transmitting mode 206 may involve implementing a static link for transmitting the data over the communication channel.

Fig. 3 provides an algorithm that is suitable to be used by the elements represented in Fig. 2 to provide an example of implementation of the proposed technique.

The communication device placed in the sensing mode 204 obtains 302 an observed channel condition of a communication channel for at least one first instance and provides 304 the observed channel condition for the at least one first instance to the predictive model 208.

The switch 202 obtains 306, from the predictive model 208 having received the observed channel condition for the at least one first instance, a prediction of a potential interference on the communication channel for at least one second instance subsequent to the at least one first instance.

The switch 202 may further obtain 308, for instance from the predictive model 208, an indication of a reliability of the prediction of the potential interference on the communication channel for the at least one second instance.

The switch 202 may further obtain 310, for instance from an entity (not represented) in charge of a policy of the communication system, a performance objective. The performance objective may be any kind of performance requirement or communication performance requirement that may be set according to a predetermined policy. Examples of communication performance objectives include a minimum data rate or a maximum packet error rate. An example of performance requirement may involve obtaining a sufficient amount of information to allow identifying or characterizing a specific interfering source.

Based at least on the information obtained in 306 and if applicable further based on the information obtained in 308 and 310, the switch 202 decides 312 on a corresponding operational state for each of the at least one second instance. The result of this decision leads to one of two possible outcomes for a given second instance. Either the communication device is placed in the transmitting mode 206 and may thusly transmit 314 data over the communication channel or the communication device is placed in the sensing mode 204 and may thusly obtain an observed channel condition of the communication channel for the given second instance. A new iteration of the algorithm may then be executed for the given second instance.

When the observed channel condition for the given second instance is provided to the predictive model 208 and the switch 202 is configured to use reinforcement learning to decide on an operational state given an interference prediction is provided as input to the switch 202, then the switch 202 may be updated by comparing the observed channel condition, which represents a presence or an absence of observed interference for the given second instance, with the prediction of interference for the given second instance that was obtained during the previous iteration of the algorithm. This allows further enhancing the process for deciding on an operational state.

Possible interference models that may be used according to examples of the proposed technique are now described.

A first, simple, possible model, called "Model 1" is described as following: the interferer is active in a time slot with probability $p$ and not active with probability $(1 - p)$. With this model, if $p$ is known, then sensing is useless because the prediction of the interference is always equal to $p$.

A second possible model to describe the behaviour of the interferer, called "Model 2", is a Markov chain where the states of the model represent the states of the channel. For instance, if there are two possible channels the states can be: $s_0 = (0)$, $s_1 = (1)$ meaning that the model assumes that an interferer is either in channel 0 or in channel 1. Such model may be proposed to characterize for instance the activity of a communication device using a Wi-Fi communication channel in the ISM public band for example.

In an example, this model may be used to predict a potential interference over a communication channel labelled as "channel 1", with state $s_0$, corresponding to the interferer being in channel 0, being used to indicate an absence of interference at least over channel 1, while state $s_1$, corresponding to the interferer being in channel 1, may be used to indicate a presence of interference over channel 1.

A third, more advanced, possible model, called "Model 3" is another Markov chain where the states of the model represent the states of the channel and further include the number of time slots spent in this channel. For instance, if there are two possible channels, the states can be: $s_0 = (0, 1)$, $s_1 = (0,2)$, $s_2 = (0,3)$, $s_3 = (1,1)$, $s_4 = (1, 2)$, $s_5 = (1,3)$ meaning that the interferer is either in channel 0 since one time slot (state $s_0$), since two time slots (state $s_1$), or since three time slots or more (state $s_2$), or in channel 1 since one time slot (state $s_3$), since two time slots (state $s_4$), or since three time slots or more (state $s_5$).

Let us consider, for a communication channel, a series of transmission opportunities in the time domain. Each transmission opportunity may then be identified by a corresponding time noted $t$. $t = 0$ corresponds to an initial transmission opportunity, $t = 1$ corresponds to the next transmission opportunity and so on.

Let $X_1, X_2, X_3, ..., X_t$ be random variables representing the state of a Markov chain at time $t$. The parameters of the Markov chain model then represent the transition probabilities to go from one state to another state such as $P(X_t = s_0 | X_{t-1} = s_1) = p_{10}$. For instance in the simple, two-state Model 2, four transition probabilities noted $p_{00}$, $p_{01}$, $p_{10}$ and $p_{11}$ may be defined as the probabilities of, respectively, remaining in channel 0, switching from channel 0 to channel 1, switching from channel 1 to channel 0 and remaining in channel 1.

As a result, the second and third possible models may be represented by a matrix $P$ where the coefficient $p_{ij}$ at the i-th row and j-th column represent the probability $P(X_t = s_j | X_{t-1} = s_i)$. According to this representation, the matrix $P$ for the second possible model is the following $P = \begin{bmatrix} p_{00} & p_{01} \\ p_{10} & p_{11} \end{bmatrix}$.

A vector $\underline{\pi}_t$ may be defined to represent the probabilities to be in the different states at time t such that: $\underline{\pi}_t = [P(X_t = s_0) \; P(X_t = s_1) \cdots]$.

The vector $\underline{\pi}_{t+1}$ is obtained according to equation (E1) below.

Equation (E1) $\underline{\pi}_{t+1} = \underline{\pi}_t P$

Fig. 4 represents a result 402 of calculating an interference probability, using an implementation of "Model 2" for a series of 20 time slots at times $t = 1$ to $t = 20$, considering arbitrary time units, where sensing is performed only at $t = 0$ and indicates an absence of interference over a communication channel of interest.

Fig. 5 represents a result 502 of calculating an interference probability using a possible implementation of "Model 3" for a series of 25 time slots at times $t = 1$ to $t = 25$, considering arbitrary time units, where sensing is performed only at $t = 0$ and indicates an absence of interference over a communication channel of interest.

One can observe that, unlike with Model 1, the estimated interference probability in the case of using "Model 2" or "Model 3" is not constant over time due to the influence of the transition probabilities.

Let us consider a scenario where a sensing operation is performed at time $t$ and one of the states defined in the model is directly observed. A vector noted $\underline{\pi}_t$ may then be defined, at time $t$, as being composed of a 1 at the index of the observed state and of 0's at the index of all other states defined in the model. This simply means that the state is known with probability one, i.e., perfectly known.

If the state is not directly observable at time $t$, i.e., it is not deterministic, as in the case of a hidden Markov chain, an inference algorithm can be used to compute $p(X_t|o_1, ..., o_n)$, where $o_1, ..., o_n$ represent n previous observations. Then, $p(X_t = s_i|o_1, ..., o_n)$ represents the $i^{th}$ component $P(X_t = s_i)$ of $\underline{\pi}_t$.

One realization of a Markov chain means that the random variables $X_1, X_2, X_3, ..., X_t$ are drawn according to the corresponding Markov chain model (for instance "Model 2" or "Model 3") and the values taken by each random variable are observed.

An example of one such realization (602) is illustrated by Fig. 6.

The parameters of the predictive model, e.g., $p$ for "Model 1" or $p_{ij}$ 's for "Model 2" and "Model 3" may be predetermined. If not, they can be estimated.

A possible estimation process relies on counting event occurrences. For instance, by counting observed transitions from state $i$ to state $j$ across a number of channel observations and dividing by the number of channel observations, an estimate for $p_{ij}$ in "Model 2" or "Model 3" can be obtained.

By counting a number $k$ of observed interferences across a number $n$ of channel observations, the interference probability may be estimated, or approximated, as $\widehat{p_1} = k/n$ , according to a standard approach.

When estimating in real-time, the estimates might not be exact. Hence, a reliability metric should accompany each estimated parameter to reflect its trustworthiness. This reliability is vital for fair interference predictions and should be factored into the prediction algorithm.

Details about how to obtain such reliability metric in the exemplary contexts of "Model 1", "Model 2" and "Model 3" are now provided.

There are different possible ways to implement the reliability mechanism.

For "Model 1", if the parameter $p$ is not predetermined, it can be derived from the observations obtained by conducting the sensing operation. By examining n channel observations and noting $k$ active interference occurrences, the parameter $p$ may be treated as a random variable. Assuming independent observations, as the number of observations grows, the variance of this empirical mean decreases. The Gaussian approximation approach is appropriate when the parameter $p$ is not too close to 0 or 1 and if the number of observations n is not too small.

For small values of $n$, it is more accurate to consider the channel observations as $n$ samples from a Bernoulli random variable $Y$ with hidden parameter $p$. The corresponding binomial random variable is $Z_n = \sum_{i=1}^{n} Y_i$ , and the probability to observe the interference $k$ out of $n$ times for a given value of $p$ is given by the Binomial distribution, noted $P(Z_n = k) = \binom{n}{k} p^k (1-p)^{n-k}$ . The probability P that the parameter p is equal to a given value when the interference is observed $k$ out of $n$ times is given by a Beta distribution, noted $f_{k,n}(p) = \binom{n}{k} p^k (1-p)^{n-k} / \int_q \binom{n}{k} q^k (1-q)^{n-k} dq = (n+1) \binom{n}{k} p^k (1-p)^{n-k}$ , as shown in Fig. 10 for two sets of values {$n$, $k$} which are {$n = 100$, $k = 3$} (1002) and {$n = 33, k = 1$} (1004). The Beta distribution is of interest to characterize the reliability of the knowledge of the interference probability p. The mean of this distribution, noted

$$E[\mathcal{P}],$$

may be calculated by equation (E2) below. It is a property of the Beta distribution coming from the Binomial modelling.

$$\text{Equation (E2)} \qquad E[\mathcal{P}] = \widehat{p_2} = (k+1)/(n+2)$$

Using $\widehat{p_1} = k/n$ instead of $\widehat{p_2}$ yields an over-estimation of the expected performance when $n$ is small.

The distribution of $P$ enables to compute the reliability on the estimate of $p$. If a criterion to be met before starting a communication is to make sure, with a very high confidence (95%), that $p < \varepsilon$ with $\varepsilon$ being a threshold (1006) that is set to an arbitrary value, then it is possible to compute the minimum number of sensing observations to achieve the target confidence. With $\varepsilon = 0.1$, $n \geq 28$ if $k = 0$, $n \geq 48$ if $k = 1$ and $n \geq 62$ if $k = 2$.

Both "Model 2" and "Model 3" are described as a Markov chain. The Markov chain parameters are estimated by observing transitions between states of the Markov chain as follows, assuming that n observations of a transition from a given state $s_i$ are conducted. For the sake of simplicity, we further assume that there are only two possible states stemming from $s_i$ being states $s_{j_1}$ and $s_{j_2}$. The aim is to characterize $p_{ij_1} = P(X_t = s_{j_1}|X_{t-1} = s_i)$ and $p_{ij_2} = 1 - p_{ij_1} = P(X_t = s_{j_2}|X_{t-1} = s_i)$.

Using the same logic as with "Model 1", observing these transitions can be approximated to sampling $n$ times a Bernoulli random variable $Y$. The parameters $p_{ij_1}$, $p_{ij_2}$ thus become random variables.

In another scenario, the parameters of the Markov chain model for a number of potential interferers could be perfectly known but there may be an uncertainty regarding which specific interferer is active. In this case, the probability $P$ ($p = \alpha$) corresponds to the probability that the interferer having the parameter $p = \alpha$ is active. Then, once the interferer is completely identified, there is no remaining uncertainty.

From the discussion above, it is apparent that by expressing the prediction as a probability distribution, it inherently provides a figure of merit pertaining to the reliability of the prediction. For instance, a mean value and a standard deviation value or a given quantile, among other possible values, may be derived from such probability distribution. In contrast, a standard interference prediction leaves its reliability unknown.

One possibility for determining the estimation $\hat{p}_{ij}$ of the interference probability in the cases of "Model 2" or "Model 3" is to equate it to the average of the corresponding distribution of $p_{ij}$, as:

$\hat{p}_{ij} = E[p_{ij}] = \int_{p_{ij}} p_{ij} P(p_{ij}) \, dp_{ij} = \int_{p_{ij}} p_{ij} f_{k,n}(p_{ij}) \, dp_{ij}$, where the solution is given by equation (E2), namely $\hat{p}_{ij} = (k+1)/(n+2)$.

Similarly in the case of "Model 1", $p_{ij}$ is simply p and the estimated interference probability is directly equal to the estimated model parameter 1 - $\hat{p}$.

For "Model 2" and "Model 3", one still has to compute the estimated interference probability from the parameters of the predictive model in order to predict the interference in the future. Following the prior logic, the interference probability $\hat{p}_j^{t+1}$ at time t + 1 can be set to the mean of its distribution using the previously obtained estimated values $\hat{p}_{ij}$ : $\hat{p}_j^{t+1} = E[p_j^{t+1}] = \sum_i E[p_i^t \, p_{ij}] = \sum_i E[p_i^t] \, \hat{p}_{ij}$.

Alternatively, a second possibility for estimating $\hat{p}_{ij}$ is to apply the preceding formula, where rather than computing individual probabilities $P(X_t = s_i)$ for each state $s_i$, one seeks to obtain the complete distribution of the random variable $P(X_t = s_i)$ for all states $s_i$. This allows access to all the information for the distribution and not just its mean.

Considering "Model 2", let us consider a scenario where $k_0$ transitions from $s_0$ to $s_0$ have been observed out of $n_0$ observations of state $s_0$ and $k_1$ transitions from $s_0$ to $s_1$ have been observed out of $n_1$ observations of state $s_1$. Further considering that at $t = 0$, $\underline{\pi}_0 = [1\ 0]$, i.e., $p_0^0 = 1$ with no uncertainty and $p_1^0 = 0$ with no uncertainty, which means that we observe the state $s_0$ of the interference, then applying equation (E1) facilitates the determination of the next interference probability: it can be used in particular to calculate the mean interference probability for a succinct prediction or to establish the entire probability distribution for a more comprehensive insight into potential interference for the next time slot.

As examples, for t = 1, we have $p_0^{(t=1)} = p_{00} \sim Beta(k_0 + 1, n_0 - k_0 + 1)$, and $p_1^{(t=1)} = p_{01} \sim Beta(n_0 - k_0 + 1, k_0 + 1)$, for $t = 2$, we have $p_0^{(t=2)} = p_{00}^2 + p_{01}p_{10}$, and so on.

The abovementioned distributions depend only on the parameters $k_0$, $n_0$, $k_1$, $n_1$ and the specific time t.

To estimate the distribution of $p_i^{(t+\Delta)}$, a numerical approach could involve e.g. sampling many times (typically 100.000 times) the random variable or iterate $\Delta$ times equation (E1) for each realization if the analytical expression of the random variable for $p_i^{(t+\Delta)}$ is not known. This provides accurate results but at the expense of a high complexity.

An alternative and less complex approach in terms of computational resources seeks closed-form formulas to directly obtain the distribution of $p_i^{(t+\Delta)}$. This approach is dramatically less resource consuming than the numerical approach. Interestingly, it has been observed that the distribution of $p_0^{(t=2)}$ or more generally $p_i^{(t+\Delta)}$ can be accurately

estimated by a Beta distribution. Assuming this is accurate, an analytical expression of the distribution of $p_0^{(t=2)}$ as a function of $k_0, n_0, k_1, n_1$ can be derived. Employing a moment matching method, which uses moment equations to identify the resultant random variable parameters, may be advantageous. The moment matching methods with other distribution may also be considered.

The discussion above shows that the predictive model 208 has parameters which are predetermined or which are estimated based on past sensing measurements and have a measure of reliability.

These parameters allow the predictive model 208 to determine and provide a prediction of a potential interference for an upcoming instance when provided with a sensing measurement for a recent instance or with a sequence of sensing measurements for a plurality of recent instances.

The interference prediction may be provided for several upcoming time slots at once, as illustrated by Fig. 7 in the case where the predictive model 208 is a trained neural network.

Specifically, at least one observed channel condition of a communication channel, obtained (702) as a sensing measurement for at least one transmission opportunity, is provided (704) as input to the trained neural network. A prediction of a potential interference on the communication channel for each of at least one upcoming transmission opportunity is then obtained (706) as output of the trained neural network.

Considering specific values of the estimated probabilities $p_i^{(t)}, p_i^{(t+1)}, p_i^{(t+2)}, \cdots$ and specific values of the state $s_i$ for each of the time slots $t$, $t + 1$, $t + 2$, ... for any state $s_i$, it is possible to define $C\left(\left\{p_i^{(t)}, p_i^{(t+1)}, p_i^{(t+2)}, \dots\right\}_i\right)$ as an objective or, at least, as a metric related to an objective.

Possible objectives include one or more objectives related to a functioning of the communication system, in particular one or more communication objectives such as maximizing an overall communication rate, maintaining a communication rate above a given threshold, ensuring a transmission of a data packet at or before a given instance or minimizing a communication latency, or one or more objectives not directly related to communication, such as a characterization of interference, for instance in the sense of achieving a high reliability of a low value of interference.

A standard communication objective is to maximize the expected sum rate $C = E_T[R]$ over $T$ time slots. This expected sum rate may be obtained by averaging the expected rates at a given time slot: $E_T[R] = \frac{1}{T}\sum_t E[R_t]$ where $R_t$ is the random variable that represents the data rate at time $t$. Alternatively, the expected sum rate may be obtained by calculating a discounted sum of the expected rates at a given time slot: $C = \Sigma_t \lambda^t E[R_t]$, where $\lambda < 1$.

Without notion of model reliability first, the quantity $E[R_t]$ can then be computed using the estimated probabilities of interference $\left\{p_i^{(t)}, p_j^{(t)}, \dots\right\}$ as $E[R_t] = \int p_i^{(t)} R(s_i)\, ds_i$, or $E[R_t] = \Sigma_i p_i^{(t)} R(s_i)$ if the interference can take continuous or discrete values, respectively. The notation $R(s_i)$ represents the communication rate achieved when the interference state is $s_i$.

When including the reliability of the interference prediction model, the expected sum rate $C$ is obtained as

$$C = E_{\{p_i^{(t)}\}}\left[\Sigma_i p_i^{(t)} R(s_i)\right] = \Sigma_i E[p_i^{(t)}]R(s_i) = \Sigma_i\Sigma_j P\left(p_i^{(t)} = j\right) * j * R(s_i) = \Sigma_i R(s_i)\widehat{p_i}^{(t)}$$ where again the

sum is replaced by an integral in case of a continuous pdf $P\left(p_i^{(t)}\right)$.

Specific examples are now provided.

For instance, let us assume that the probability that the interference is active is $p(s_{interf}) = 0.2$ and thus the probability that the interference is inactive is $p(s_{No\ interf}) = 0.8$. This is compatible with the prediction model described above without notion of model reliability. We assume that the rate achieved with the chosen communication parameters is 3 bits per channel use if interference is inactive and 0 if interference is active. Then, we get $C = E[R_t] = 0.8 * 3 + 0.2 * 0 = 4$.

Let us assume now that $p(p(s_{interf}) = 0.2) = 0.1$, $p(p(s_{interf}) = 0.3) = 0.5$, and $p(p(s_{interf}) = 0.4) = 0.4$. Accordingly, $p(p(No\ interf) = 0.8) = 0.1$, $p(p(No\ interf) = 0.7) = 0.5$, and $p(p(No\ interf) = 0.6) = 0.4$. This is compatible with the prediction model described in the previous section with model reliability. We denote by $p_1$ the random variable "$p(interf) = 0.2$", by $p_2$ the random variable "$p(interf) = 0.3$", by $p_3$ the random variable "$p(interf) = 0.4$. "

Then, $C = p(p_1)E_{p_1}[R_t] + p(p_2)E_{p_2}[R_t] + p(p_3)E_{p_3}[R_t]$,

If $p_i^{(t)}$ follows a continuous probability density function $f\left(p_i^{(t)}\right)$, then $C = \int f\left(p_i^{(t)}\right)E_{p_t}[R_t]\mathrm{d}p_t$,

For instance, if the state random variable is $P_{s_0}^{t=1}$ with distribution $f_{k_0,n_0}(p)$ (as already described), this yields

$$E[R] = \int_{p=0}^{1} f_{k_0,n_0}(p)E_p[R]dp = \int_{p=0}^{1} f_{k_0,n_0}(p)(1-p)R_{max}$$

$$E[R] = R_{max}\left(1 - \int_{p=0}^1 p\, f_{k,n}(p)dp\right) = R_{max}\left(1 - E\left[P_{s_0}^{t=1}\right]\right),$$

$$E[R] = R_{max}\left(1 - \frac{k_0+1}{n_0+2}\right).$$

In the above calculations, the mean value of $E\left[P_{s_0}^{t=1}\right]$ has been used as $E\left[P_{s_0}^{t=1}\right] = \frac{k_0+1}{n_0+2}$.

While this result converges towards k/n when n is large, it is different when n is small. This is due to the positive skewness of the Beta distribution (when $k < n$ or negative skewness when $k > n$). Considering the estimate $k/n$ instead of $(k + 1)/(n + 2)$ leads to an over estimation of the rate. The expected relative over estimation is:

$$E\left[\frac{1-k/n}{1-(k+1)/(n+2)}\right] = \frac{1-p}{1-(pn+1)/(n+2)}.$$

For an hidden parameter value $p_{00} = 0.1$, this over estimation is around 10% when $n = 7$, 3% when $n = 30$, and 1% when $n = 80$.

If the interference prediction is a probability density function representing the possible SNR, then it shall be considered that the output of the interference prediction is no more the state it is likely to be but the SINR or SIR or even the received power of the interference. In such a case, the model may describe probabilities on the possible values of the said SINR or SIR or received power instead. Then, it is possible to derive the rate as functions of the SINR or SIR or received power. If considering that SINR or SIR or received power is continuous then the equation for the continuous case should be used. Otherwise, the discrete version should be used.

An alternative communication objective can be to ensure a minimum rate with a given probability $C = p(R < Threshold)$ (called outage capacity), where we should have $C < \varepsilon$. More specifically, the $C_\varepsilon$-outage capacity is in general defined as $C_\varepsilon = max\{Threshold : p(R < Threshold) < \varepsilon\}$.

Considering the communication objective to ensure the minimum rate with the given probability as defined above, let us assume that the interference is represented by a random variable $s$ that can take two values: $s = s_{No\ interf} = 0$ meaning inactive interference and $s = s_{interf} = 1$ meaning active interference. Let us further assume that a scenario of non-robust communication such that, when the operational state is a communication mode, the communication succeeds when interference is inactive but fails if interference is active. Then, without notion of reliability, the outage capacity $C$ is obtained as $C = {}_p(s_{interf})$. However, if reliability is taken into account, then the outage capacity $C$ itself becomes a random variable.

Indeed, considering for instance the case $C = p(s_{interf})$, we have that $p(s_{interf}) = p_{s_{interf}}^t$ is a random variable. Hence, so is $C$. As a result, there are two possible courses of action.

A first possible course of action is to compute the average $C = \mathrm{E}[C'] = E\left[p_{s_{interf}}^t\right] = \int f\left(p_{s_{interf}}^t\right) p_{s_{interf}}^t dp_{s_{interf}}^t$. This means computing the average of the interference probability events yielding a violation of the minimum rate probability guarantee. Nevertheless, if only a limited number of observations is available to estimate $p(x = interf)$, then the associated random variable has a flat shape over the interval [0,1[, meaning that the mean value is obtained with a low confidence.

A second possible course of action is to set a reliability-based condition on the target value of the outage probability. Since $C = p(R < Threshold) = p(s_{interf})$, the $C_\varepsilon$-outage probability is reached with a probability $P(p(s_{interf}) < \varepsilon)$ and not reached with a probability $1 - P(p(s_{interf}) < \varepsilon)$. As a result, it is reasonable to set, as a reliability based condition, that the $C_\varepsilon$-outage probability should be reached with high probability $\beta$, i.e., $C = P(P(R < Threshold) < \varepsilon) > \beta$.

More specifically, for a given reliability $\beta$ one has two choices: which are setting a specific value for $\varepsilon$ and finding a corresponding value for $R$, or conversely-setting a specific value for $R$ and finding a corresponding value for $\varepsilon$.

In the first case, $C_\varepsilon = max\{R : P(P(R < Threshold) < \varepsilon) > \beta\}$

In the second case, one shall first find a threshold such that $P(R < Threshold) \neq 1$ and then, find $\varepsilon$ such that $C_\varepsilon = R : P(P(R < Threshold) < \varepsilon) > \beta$.

Considering for instance the random variable $p_{s_0}^{t=1}$ with distribution $f_{k_0,n_0}(p)$, then $P(P(R < Threshold) < \epsilon) = \int_{p=0}^\epsilon f_{k_0,n_0}(p)\mathrm{d}p$ where the latter function is the incomplete Beta function and can thus be computed easily.

Considering numerical values, with $\varepsilon = 0.1$, $\beta = 0.95$, and $k = 0$ (which yields the highest confidence) $P(P(R < Threshold) < \varepsilon) > \beta$ is achieved only for $n \geq 28$. This value increases to $n = 48$ for $k = 1$ and $n = 62$ for $k = 2$.

Given an interference prediction provided by the predictive model 208 over at least the next time slot, noted $pred_t$, the switch 202 may decide whether to place the communication device in the transmitting mode 206 or in the sensing mode 204 by applying a decision strategy.

The decision strategy may be designed in order to maximize a metric related to an objective pertaining to performance, for instance pertaining to communication performance.

Observations made via sensing operations performed in the sensing mode 204 may be used to improve the decision strategy by a learning mechanism, specifically a reinforcement learning mechanism.

Alternatively, the decision strategy may be based on one or more fixed criteria, i.e. a fixed set of criteria. This is the case when the learning mechanism is already trained and its internal parameters do no longer vary.

Fig. 8 illustrates an example of an interaction loop between the switch 202 using reinforcement learning and an environment 804. In this case, the environment is a representation of the communication channel and the predictive model 208, to output an interference prediction given an operational state as input.

Standard reinforcement learning mechanisms are generally modelled by states, actions, and short-term rewards.

The predictive model 208 outputs an interference prediction $pred_t$ for an upcoming instance corresponding to time $t$. This prediction is viewed by the switch 202 as a "state" of the reinforcement learning mechanism.

The prediction allows the switch 202 to decide on an "action" for the upcoming instance corresponding to time t, where the action is a choice of operational state. The possible actions therefore match the possible operational states.

The "short-term reward" is a metric related to short-term performance, for instance short-term communication performance, for the instance corresponding to time $t$. The short-term reward is obtained as feedback after the "action" for said instance has been decided.

Some examples of possible ways to choose the short-term reward $r_t$ are now described.

When the objective is throughput, it is possible to set $r_t = 0$ if the action of sensing is chosen and to set $r_t$ as a measured throughput (e.g. at the receiver) or to set $r_t = E[R_t]$ if the action of transmitting is chosen. More generally, the short-term reward can be set to a low value (such as 0 in the above example) when the sensing action is used as no communication takes place in this case.

When the objective is reliability, it is possible to set $r_t = p(s_{No\ interf}) > e$ or $P(p(s_{No\ interf}) > \varepsilon)$ when the action of transmitting is chosen. More generally, the short-term reward may reflect the short-term communication performance for the instance corresponding to time $t$, which itself depends on whether or not interference is active for the instance corresponding to time $t$.

The reinforcement learning mechanism may be enhanced by applying a policy aimed at maximizing a long-term reward which for instance may be a discounted sum of short-term rewards: $G_t = \Sigma_t \lambda^t r_t$.

Fig. 9 showcases an alternative approach where the decision strategy is based solely on a fixed criterion.

The approach involves computing a figure of merit (902) and comparing it to a pre-established threshold (904). Depend on the result of the comparison, the transmitting action or the sensing action is initiated.

As an example, assume that a transmission should occur only if one can ensure that the probability that the transmission rate falls below a given threshold is low. It means that one computes the objective $C = P(P(R < Threshold) < \varepsilon)$. The transmitting action is then initiated when $C$ crosses a predetermined threshold corresponding to a desired performance. Otherwise, the sensing operation is initiated.

Initiating the sensing operation enables collecting data to improve the determination of the parameters of the predictive model and of the reliability of said parameters. This means that the abovementioned figures of merit are implicitly linked to the model reliability.

Another possibility is to include as part of the figure of merit an explicit term linked to the reliability of the predictions output by the predictive model. This allows prioritizing model discovery at the beginning of a communication session, such as the variance of the entropy of the distribution of the parameters of the predictive model.

Fig. 11, Fig. 12 and Fig. 13 depict three different examples where a switch 202 uses an interference prediction output by a predictive model 208 to choose between two operational states corresponding to a sensing mode 204 or another mode 206, in these examples a communication mode.

In all three different examples, the interference prediction conveys information about whether interference will be active at one or more next time slots and the switch decides on the operational state based on this information.

Further, in all three different examples, whenever the operational state corresponds to the sensing mode, an observation is thusly made and served to help update the predictive model 208.

In Fig. 12 and in Fig. 13, a measure of reliability is further provided along with the interference prediction and the switch uses the interference prediction and the measure of reliability jointly to decide on the operational state. This means in particular that in the examples of Fig. 12 and Fig. 13, the choice of a specific operational state is not based on a single condition that depends only on the interference prediction as in the example of Fig. 11, but on one or more conditions that relate both to the interference prediction and to the measure of reliability associated to this interference prediction.

Further, in the example of Fig. 13, the observations obtained in the sensing mode further serve to improve the reliability of the predictive model. As a result, in the example of Fig. 12, the reliability may be related to a predictive model having fixed parameters, therefore the reliability may itself be based, directly or indirectly, on these fixed parameters. On the contrary, in the example of Fig. 13, the predictive model may be improved by obtaining observations and/or feedback with the consequence of improving not only the future predictions but also the reliability of the future predictions.

**Claims**

1.  A method implemented within a system using a communication channel, the method comprising, for a given instance in a sequence,

    - obtaining (306) a prediction of a potential interference on the communication channel, the prediction being provided by a predictive model (208); and
    - providing (312) an indication of an operational state selected based on the prediction and on a performance criterion, wherein the operational state corresponds to one element among conducting an operation which allows observing (302) a channel condition of the communication channel for the given instance, and not conducting said operation.

2.  The method of claim 1, wherein, after the operation is conducted for the given instance, the predictive model is updated with the observed channel condition for the given instance.

3.  The method of claim 1 or 2, wherein the operational state is selected by obtaining a figure of merit (902) associated to the prediction, comparing the figure of merit with a threshold (904) representing a desired performance, and deciding on the operational state based on a result of the comparison.

4.  The method of claim 3, wherein the figure of merit relates at least to a reliability of the prediction.

5.  The method of claim 4, wherein the reliability is based on at least one of:

    - one or more fixed parameters,
    - observed channel conditions, and
    - feedback concerning a system performance.

6.  The method of any one of claims 1 to 5, wherein the operational state is selected by applying a decision strategy based on a fixed set of criteria.

7.  The method of any one of claims 1 to 5, wherein the operational state is selected by applying a decision strategy which evolves from an instance to another, informed by at least one learning mechanism.

8.  The method of claim 7, where the at least one learning mechanism includes a reinforcement learning mechanism.

9.  The method of any one of claims 1 to 8, wherein the predictive model is informed with at least one observed channel condition of the communication channel for at least one previous instance to provide the prediction for the given instance.

10. The method of any one of claims 1 to 9, wherein the prediction of the potential interference comprises a probabilistic measure of interference for the given instance and/or upcoming instances and/or wherein the prediction of the potential interference includes an estimate of an interfering power level.

11. The method of any one of claims 1 to 10, wherein the operational state corresponding to not conducting the operation further corresponds to transmitting data.

12. The method of claim 11, further comprising, after providing an indication of an operational state corresponding to transmitting data, implementing a static link for transmitting the data over the communication channel.

13. A non-transitory computer-readable recording medium on which a program is recorded for implementing the method according to one of claims 1 to 12 when the program is executed by a processor.

14. A system configured to, for a given instance in a sequence,

- obtain (306) a prediction of a potential interference on a communication channel, the prediction being provided by a predictive model (208); and
- provide (312) an indication of an operational state selected based on the prediction and based on a performance criterion, wherein the operational state corresponds to one element among conducting an operation which allows observing (302) a channel condition of the communication channel for the given instance and not conducting said operation.

102 104

Time

**FIG. 1**

**FIG. 2**

```
                    ┌─────────────────────────────────┐
              ┌────→ │  Observing a channel condition  │
        302 ──┘      │  of a communication channel     │
                    └─────────────────────────────────┘
                                 │
                                 ▼
                    ┌─────────────────────────────────┐
              ┌────→ │ Provide the observed channel    │
        304 ──┘      │ condition to a predictive model │
                    └─────────────────────────────────┘
                                 │
                                 ▼
                    ┌─────────────────────────────────┐
              ┌────→ │  Obtain a prediction of a       │
        306 ──┘      │  potential interference on the  │
                    │  communication channel          │
                    └─────────────────────────────────┘
                                 │
                                 ▼
                    ┌ ─ ─ ─ ─ ─ ─ ─ ─ ─ ─ ─ ─ ─ ─ ─ ─ ┐
              ┌────→   Obtain an indication of a
        308 ──┘      │ reliability of the prediction   │
                     └ ─ ─ ─ ─ ─ ─ ─ ─ ─ ─ ─ ─ ─ ─ ─ ─ ┘
                                 │
                                 ▼
                    ┌ ─ ─ ─ ─ ─ ─ ─ ─ ─ ─ ─ ─ ─ ─ ─ ─ ┐
              ┌────→   Obtain a performance objective
        310 ──┘      └ ─ ─ ─ ─ ─ ─ ─ ─ ─ ─ ─ ─ ─ ─ ─ ─ ┘
                                 │
                                 ▼
                    ┌─────────────────────────────────┐
              ┌────→ │ Provide an indication of an     │
        312 ──┘      │ operational state               │
                    └─────────────────────────────────┘
                                 │
                                 ▼
                    ┌─────────────────────────────────┐
              ┌────→ │ Transmit data over the          │
        314 ──┘      │ communication channel           │
                    └─────────────────────────────────┘
```

**FIG. 3**

**FIG. 4**

**FIG. 5**

602

Transmitting

transmitting

0        5       10       15       20       25       30

Time

**FIG. 6**

702 → Obtain, for each of at least one transmission opportunity, a corresponding observed channel condition

704 → Provide the observed channel condition(s) to a neural network

706 → Obtain a prediction of a potential interference on the communication channel for each of at least one upcoming transmission opportunity

**FIG. 7**

State $s_t = pred_t = \{p_t(x), p_{t+1}(x), p_{t+2}(x), ...\}$

Gain $G_t$

Action $a_t$ :
sensing or
transmitting

State $s_t$

Reward $r_{t+1}$ short-
term performance

**FIG. 8**

**FIG. 9**

**FIG. 10**

**FIG. 11**

204

202

Communication
objective

Switch

Sensing

Help update the model

Interference
prediction

Interference
prediction model

208

206

Comm.

Will the interference be active
at the next time slot(s)?

Is the prediction currently reliable?

**FIG. 12**

204

202

Communication
objective

Switch

Sensing

Help update the model
+ improve the model reliability

Interference
prediction

Interference
prediction model

208

206

Comm.

Will the interference be active
at the next time slot(s)?

Is the prediction currently reliable?

**FIG. 13**

# EUROPEAN SEARCH REPORT

Europäisches
Patentamt
European
Patent Office
Office européen
des brevets

Application Number

**EP 23 30 6758**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHAGHLUF NAGWA ET AL: "Energy and spectrum efficiency in predictive-cooperative cognitive radio networks", WIRELESS NETWORKS, ACM, 2 PENN PLAZA, SUITE 701 – NEW YORK USA, vol. 27, no. 8, 17 September 2021 (2021-09-17), pages 5297-5311, XP037619954, ISSN: 1022-0038, DOI: 10.1007/S11276-021-02786-W [retrieved on 2021-09-17] * section 1 * * section 1.2; page 2 – page 3 * * section 2; page 3 * * section 2.3-2.4; page 4 – page 5 * | 1-14 | INV. H04B17/391 H04B17/373 H04W16/14 |
| X | CHAUHAN PRAKASH ET AL: "Cooperative Spectrum Prediction-Driven Sensing for Energy Constrained Cognitive Radio Networks", IEEE ACCESS, IEEE, USA, vol. 9, 4 February 2021 (2021-02-04), pages 26107-26118, XP011837665, DOI: 10.1109/ACCESS.2021.3057292 [retrieved on 2021-02-12] * section I; page 3 * * section II; page 2 * * section III * | 1-14 | TECHNICAL FIELDS SEARCHED (IPC) H04B H04W |

-----

-----

-/--

The present search report has been drawn up for all claims

| Place of search | Date of completion of the search | Examiner |
|---|---|---|
| The Hague | 12 March 2024 | Sklavos, Alexandros |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**page 1 of 2**

Europäisches
Patentamt

European
Patent Office

Office européen
des brevets

# EUROPEAN SEARCH REPORT

Application Number

EP 23 30 6758

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZUO PEILIANG ET AL: "Prediction-Based Spectrum Access Optimization in Cognitive Radio Networks", 2018 IEEE 29TH ANNUAL INTERNATIONAL SYMPOSIUM ON PERSONAL, INDOOR AND MOBILE RADIO COMMUNICATIONS (PIMRC), IEEE, 9 September 2018 (2018-09-09), pages 1-7, XP033479369, DOI: 10.1109/PIMRC.2018.8580726 [retrieved on 2018-12-18] * section I; page 1 * * section II; page 2 * * section IV; page 4 * | 1-14 | |

TECHNICAL FIELDS
SEARCHED      (IPC)

The present search report has been drawn up for all claims

| Place of search | Date of completion of the search | Examiner |
|---|---|---|
| The Hague | 12 March 2024 | Sklavos, Alexandros |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)